# EUROPÄISCHE PATENTSCHRIFT

(11) **EP 2 464 895 B1**
(45) Veröffentlichungstag und Bekanntmachung des Hinweises auf die Patenterteilung: **03.10.2018**
(21) Anmeldenummer: 10733007.8
(22) Anmeldetag: 19.07.2010
(51) Int. Cl.: F16H 25/20, F16H 25/24

(54) **VERFAHREN ZUM HERSTELLEN EINER GEWINDEMUTTER EINES KUGELGEWINDETRIEBES**
METHOD FOR PRODUCING A THREADED NUT OF A BALL SCREW DRIVE
PROCÉDÉ DE PRODUCTION DE L'ÉCROU FILETÉ D'UNE VIS À BILLES

(30) Priorität: 10.08.2009 DE 102009036824
(43) Veröffentlichungstag der Anmeldung: 20.06.2012
(73) Patentinhaber: Schaeffler Technologies AG & Co. KG, 91074 Herzogenaurach (DE)
(72) Erfinder: OSTERLÄNGER, Jürgen, 91448 Emskirchen (DE); MIKO, Josef, Rochester Hills, MI 48306 (US); KRAUS, Manfred, 91074 Herzogenaurach (DE); BÄRTHLEIN, Stefanie, 91460 Baudenbach (DE)
(86) Internationale Anmeldenummer: PCT/EP2010/060446
(87) Internationale Veröffentlichungsnummer: WO 2011/018307

(56) Entgegenhaltungen:
- EP-A2- 0 074 922
- WO-A1-2008/037738
- DE-A1- 19 944 876
- DE-A1-102007 042 654
- FR-A1- 2 663 414
- JP-A- 2002 250 426
- US-A- 2 944 436

## Beschreibung

### Gebiet der Erfindung

Die vorliegende Erfindung betrifft ein Verfahren zum Herstellen einer Gewindemutter eines Kugelgewindetriebes. Kugelgewindetriebe wandeln rotatorische Bewegungen in translatorische Bewegungen um.

### Hintergrund der Erfindung

Aus DE 19944876 A1 beispielsweise ist eine Betätigungseinrichtung für eine Feststellbremse eines Kraftfahrzeuges bekannt geworden, bei der ein Kugelgewindetrieb vorgesehen ist.

Die von einem Elektromotor angetriebene Gewindespindel bewirkt eine relative Axialverschiebung zwischen der Gewindemutter und der Gewindespindel, wobei die Gewindemutter über weitere Maschinenteile in ihrer Vorschubrichtung eine Druckkraft auf einen Reibbelag einer Scheibenbremse ausübt. Zum Lösen der Feststellbremse wird die Gewindespindel in entgegen gesetzter Drehrichtung angetrieben; die Gewindemutter fährt auf der Gewindespindel zurück bis in eine Anschlagposition, in der ein Anschlag wirksam ist. Der umfangsseitige Anschlag ist wirksam, bevor die Gewindemutter mit einem auf der Gewindespindel angeordneten, den Vorsprung aufweisenden Anschlagteil axial verspannt werden kann.

In der hier beschriebenen Anwendung des Kugelgewindetriebes ist ein derartiger umfangsseitiger Anschlag für die einwandfreie Funktion des Kugelgewindetriebes von Bedeutung. Ohne einen derartigen umfangsseitigen Anschlag bestünde die unerwünschte Möglichkeit, dass die Gewindemutter wie eine fest gezogene Schraubenmutter axial verspannt wird, und ein Lösen dieser axialen Verspannung nur noch unter Aufbringung eines erheblichen Drehmomentes möglich wäre.

Bei diesem bekannten Kugelgewindetrieb müssen die an der Gewindemutter und an dem Anschlagteil vorgesehenen Vorsprünge aufeinander abgestimmt sein: vor der letzten noch möglichen Umdrehung zwischen Gewindemutter und Anschlagteil muss noch soviel axialer Abstand zwischen den beiden Vorsprüngen sein, dass diese nicht stirnseitig aneinander stoßen. Bei der letzten Umdrehung überdecken die beiden Vorsprünge einander in axialer Richtung; schließlich schlagen die beiden Vorsprünge umfangsseitig aneinander an und eine weitere Relativdrehung zwischen der Gewindespindel und der Gewindemutter ist unterbunden.

Der stirnseitig an der Gewindemutter ausgebildete Vorsprung ist massiv geformt, um auch große Drehmomente beim Anschlagen der Gewindemutter aufnehmen zu können. Zur Herstellung dieses stirnseitig vorgesehenen Vorsprungs bietet sich eine spangebende Herstellung der Kugelmutter an.

Aus DE 102007046180 ist eine ähnliche Betätigungseinrichtung bekannt geworden. Auch hier ist ein umfangsseitiger Anschlag für die Gewindemutter vorgesehen, der eine am Innenumfang der Gewindemutter ausgebildete Anschlagfläche ausgebildet ist. Diese Anschlagfläche ist an einem Stift ausgebildet, der an der Gewindemutter befestigt ist.

Aus der DE102007042654 ist eine Kugelgewindetrieb mit Verschlussringe bekannt geworden. Die Spindelmutter weist stirnseitig eine Ausnehmung, die in einem Kaltfließpressverfahren hergestellt wird. Die Kugelrille der Spindelmutter wird durch das spanlose Gewindefurchen hergestellt. Aufgabe der vorliegenden Erfindung war es, ein Verfahren zur Herstellung einer Gewindemutter eines Kugelgewindetriebes anzugeben, die insbesondere bei großen Stückzahlen wirtschaftlich herstellbar ist.

### Zusammenfassung der Erfindung

Erfindungsgemäß wurde diese Aufgabe durch das Verfahren gemäß Anspruch 1 gelöst. Das erfindungsgemäße Verfahren zum Herstellen einer Gewindemutter eines Kugelgewindetriebes, sieht vor, dass an einem axialen Ende der Gewindemutter eine sich über einen Umfangsabschnitt erstreckende, stirnseitig geöffnete Ausnehmung ausgebildet ist, wobei diese Ausnehmung radial begrenzt ist durch eine Umfangswandung der Gewindemutter, und wobei diese Ausnehmung axial begrenzt ist durch einen an der Gewindemutter ausgebildeten Boden, und wobei diese Ausnehmung in Umfangsrichtung begrenzt ist durch eine an der Gewindemutter ausgebildete Anschlagfläche für einen Vorsprung. Diese Gewindemutter ist erfindungsgemäß hergestellt nach den folgenden Schritten: ein Rohling wird in einem Umformprozess durch Umformung von Werkstoff unter Ausbildung der Ausnehmung umgeformt, wobei der Boden und die Anschlagfläche und die Umfangswandung einstückig miteinander verbunden sind.

In günstiger Weise ist die Anschlagfläche innerhalb der Gewindemutter ausgebildet. Stifte oder andere zusätzliche Bauteile, an denen die Anschlagfläche ausgebildet ist, entfallen. Die Ausnehmung ist mit einer einstückigen Wandung versehen. Das erfindungsgemäß zur Herstellung der Ausnehmung vorgesehene spanlose Umformverfahren bietet insbesondere bei großen Stückzahlen wirtschaftliche Vorteile aufgrund der kurzen Bearbeitungszeit.

Infolge der Umformung fließt Werkstoff unter Ausbildung der Wandung der Ausnehmung. Zu diesem Zweck kann dieser Umformprozess in einem Gesenk erfolgen.

Das Kaltfließpressen eignet sich für die Erfindung. Fließpressen gehört nach DIN 8583 zum Druckumformen. Die Massivumformung ermöglicht durch einen einstufigen oder mehrstufigen Fertigungsvorgang die Herstellung von Hohl- und Vollkörpern. Bei diesem Verfahren wird der Werkstoff unter Einwirkung eines hohen Druckes zum Fließen gebracht. Dabei drückt ein Stempel den Werkstückrohling durch eine formgebende Matrize. Erfindungsgemäß kann auf diese Weise die Gewindemutter mit der Ausnehmung hergestellt werden.

Die Halbwarmumformung wird in einem Temperaturbereich von 600 °C bis 950 °C durchgeführt. Die Halbwarmumformung zeichnet sich durch eine hohe Maßgenauigkeit und Oberflächengüte aus, ähnlich wie bei der Kaltumformung. Die Halbwarmumformung ermöglicht die Fertigung von komplexen Geometrien, wobei die Umformkräfte im Vergleich zur Kaltumformung, gesenkt werden können. Das Halbwarmumformen gleicht einem Schmiedevorgang und bietet die Vorteile sowohl der Kaltumformung als auch der Warmumformung.

Die Halbwarmumformung ermöglicht sehr geringen Materialeinsatz bei Reduzierung der Weiterbearbeitungskosten für anspruchsvolle Geometrien. Für die Halbwarmumformung können die vorgefertigten Rohteile induktiv erwärmt und auf vertikalen zum Teil mehrstufigen Pressen umgeformt. Bei dem erfindungsgemäßen Verfahren kann ein massiver Rohling in ein Gesenk eingesetzt werden und darin umgeformt werden; ein Stempel kann in das Material des Rohlings eindringen; das verdrängte Material fließt unter den einwirkenden Kräften gegen die Negativform des Gesenks und erhält die Gestalt der erfindungsgemäßen Gewindemutter. Durch das Eindringen des Stempels in den massiven Rohling kann bereits die rohrförmige Gestalt der Gewindemutter erzeugt werden.

Die in erfindungsgemäßer Weise hergestellte Gewindemutter weist herstellungsbedingt eine sehr genau gefertigte Anschlagfläche auf. Insbesondere im Zusammenhang mit einem umfangsseitigen Anschlag für die Gewindemutter ist eine hohe Maßgenauigkeit für die Anschlagfläche erforderlich. Denn die axiale Überlappung der Anschlagfläche mit einer Gegenfläche an einem in die Gewindemutter eingreifenden Vorsprung ist unter anderem abhängig von der Steigung der Gewindespindel und kann lediglich 1mm oder weniger betragen. Das bedeutet, die Fertigungstoleranzen an den Anschlagflächen sollten sehr eng und die Kontur sehr exakt ausgebildet sein.

Das Halbwarmumformen erfüllt diese Voraussetzungen. Denn insbesondere die Ausbildung der Anschlagfläche kann hochgenau erfolgen, wobei aufgrund des Fließens des Werkstoffes sehr enge Radien an Kanten der Anschlagfläche erzielt werden können. Enge Radien bieten den Vorteil, dass die Anschlagfläche weitgehend ohne Verlust als tragende Fläche zur Verfügung steht.

In einem weiteren Verfahrensschritt wird am Innenumfang der Gewindemutter eine Kugelrille zum Abwälzen von Kugeln durch Drehen erzeugt werden. Gemäß der Einteilung der Fertigungsverfahren nach DIN 8580 zählt das Drehen zu den Trennverfahren. Bei dem Gewindedrehen wird ein Werkzeug im Längsdrehverfahren benutzt. Der Vorschub kann der Gewindesteigung entsprechen, damit hinterlässt das Werkzeug eine Spur auf der gewünschten Schraubenlinie. Nach wiederholt durchgeführter drehender Bearbeitung kann die Kugelrille hergestellt sein.

Als Unterform des Gewindedrehens kann das Gewindestrehlen angesehen werden. Ein Werkzeug für das Gewindestrehlen hat mehrere Schneiden hintereinander. Jede hat das Profil des Gewindes, der Abstand der Schneiden entspricht der Steigung. Die Schneiden sind versetzt angeordnet, so dass jede ein Stückchen tiefer in der Spur ihres Vorgängers läuft. Für das Gewindestrehlen benötigt man nur einen einzigen Durchlauf, die Bearbeitungszeit kann somit gegenüber dem Gewindedrehen deutlich kürzer sein.

Für eine Verbesserung der Oberflächenqualität kann es zweckmäßig sein, im Anschluss an das Drehen das sogenannte Furchen der Kugelrille durchzuführen. Beim Gewindefurchen dient eine Art Schraube als Werkzeug. Beim Hereindrehen der Schraube in die Bohrung eine Kugelrille in das Material gefurcht werden. Dabei wird in der Bohrung des Werkstücks Material verdrängt, welches in das Gewinde der Furchschraube fließt. Es fallen keine Späne an, und eine verbesserte Festigkeit an der Kugelrille kann erzielt werden.

Für das erfindungsgemäße Verfahren eignen sich in günstiger Weise Vergütungsstähle und Einsatzstähle. Einsatzstähle sind aufgrund ihres geringen Kohlenstoffgehaltes für das Fließpressen - kalt oder halbwarm - gut umformbar. Im Anschluss an die Formgebung kann die erfindungsgemäß hergestellte Gewindemutter in bekannter Weise gehärtet werden; im Fall des Einsatzstahles wird das Einsatzhärten durchgeführt.

Unter Einsatzhärten versteht man das Aufkohlen, Härten und Anlassen eines Werkstücks aus Stahl, mit dem Ziel einer Steigerung des Verschleißwiderstandes durch erhöhte Randschichthärte, sowie einer Erhöhung der Belastbarkeit, ferner einer Verbesserung der Biegewechselfestigkeit durch einen zähen Kern, sowie Erhöhung der Dauerfestigkeit.

### Kurze Beschreibung der Zeichnung

Zwei Ausführungsbeispiele der Erfindung sind in den Zeichnungen dargestellt und werden im Folgenden näher beschrieben. Es zeigen:
- Fig. 1: eine Prinzipdarstellung einer Bremseinrichtung mit einem erfindungsgemäßen Kugelgewindetrieb in unbelastetem Zustand im Schnitt,
- Fig. 2: eine vergrößerte Detailansicht des Bereichs II aus Fig. 1,
- Fig. 3: eine vergrößerte Detailansicht des Bereichs III aus Fig. 1, und
- Fig. 4: die Bremseinrichtung aus Fig. 1 in belastetem Zustand mit relativ zueinander verkippten Elementen,
- Fig. 5: eine weitere Bremseinrichtung mit einem erfindungsgemäßen Kugelgewindetrieb im Schnitt,
- Fig. 6: den Kugelgewindetrieb aus Fig. 5 und
- Fig. 7: eine Ausschnittvergrößerung aus Figur 6,
- Fig. 8: Einzelteile des Kugelgewindetriebes aus Figur 6,
- Fig. 9: ein weiteres Einzelteil des Kugelgewindetriebes aus Figur 6
- Fig. 10: den erfindungsgemäßen Kugelgewindetrieb in teilweise gebrochener Darstellung, und
- Fig. 11: den erfindungsgemäßen Kugelgewindetrieb aus Figur 10 im Querschnitt entlang der Schnittlinie XI-XI.

### Ausführliche Beschreibung der Zeichnung

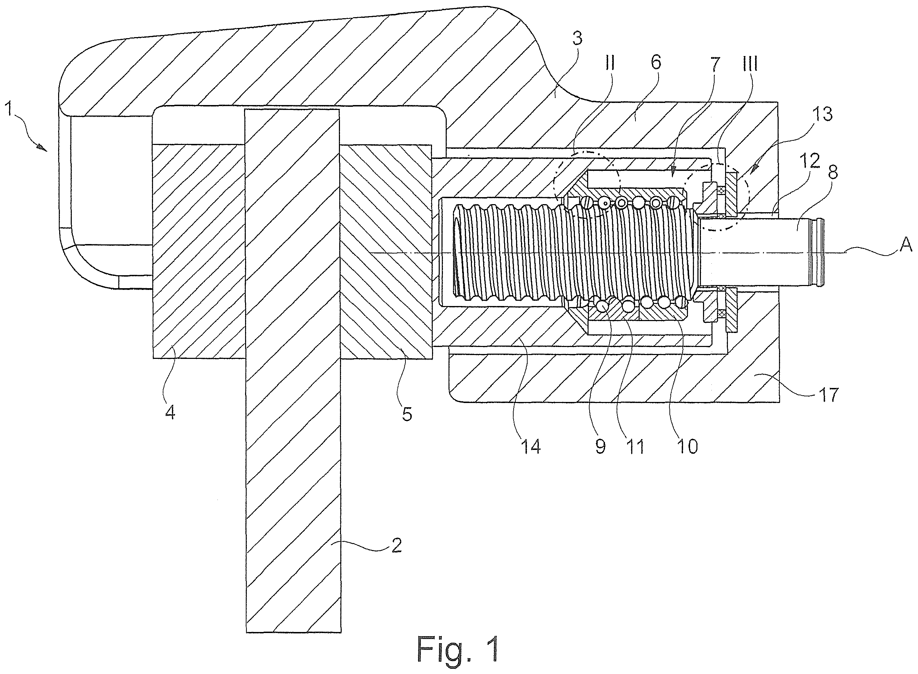

Fig. 1 zeigt eine erfindungsgemäße Bremseinrichtung 1, wie sie beispielsweise in einem Kraftfahrzeug als Parkbremse oder Feststellbremse realisiert sein kann. Die Bremseinrichtung 1 umfasst eine Bremsscheibe 2, die in bekannter Weise mit dem Rad verbunden ist, sowie eine die Bremsscheibe 2 übergreifende, im Querschnitt im Wesentlichen C-förmige Bremszange 3. In dieser sind zwei Bremsbeläge 4, 5 aufgenommen, die beidseits der zwischen ihnen angeordneten Bremsscheibe 2 positioniert sind und zum Bremsen fest an dieser anliegen, die Bremsscheibe dann zwischen sich verklemmend. Fig. 1 zeigt die Lösestellung, wenn die Bremsscheibe 2 also nicht verspannt ist, die Bremsscheibe 2 kann frei zwischen den beiden Bremsbelägen 4, 5 drehen, wenngleich diese eher aus Gründen der Darstellung direkt an der Bremsscheibe anliegen. Tatsächlich ist zwischen der Bremsscheibe 2 und den Bremsbelägen 4, 5 ein minimaler Spalt gegeben, der in der Lösestellung die freie Drehbarkeit ermöglicht.

Fig. 1 zeigt ferner einen in einem gegebenenfalls gehäuseartigen Abschnitt 6 der Bremszange 3 aufgenommenen erfindungsgemäßen Kugelgewindetrieb 7, bestehend aus einer Gewindespindel 8, auf der über Kugeln 9 geführt eine Gewindemutter 10 läuft, wobei die Kugeln 9 endlos umlaufen und über wenigstens ein Kugelrückführelement 11 stets zurückgesetzt werden. Die Spindel 8 ist mit einem hier nicht näher gezeigten Antriebsmotor, der bevorzugt im Bereich der Außenseite des gehäuseartigen Abschnitts 6 angeordnet ist und unter einem Winkel von z. B. 90° mit seiner Abtriebswelle zur Gewindespindel 8 steht, verbunden. Seine Abtriebswelle ist mit der Gewindespindel 8 über eine kardanische Verbindung gekoppelt, die den motorischen Antrieb der Gewindespindel 8 ermöglicht. Die Gewindespindel 8 ist ferner an der Bremszange 3 über ein Radiallager 12 sowie ein Axiallager 13 hier in Form eines Nadellagers lagefest drehgelagert.

Die Gewindemutter 10 ihrerseits ist mit einem Kolben 14 gekoppelt, dieser liegt an der vorderen Stirnkante der Gewindemutter 10 auf, ist dort also abgestützt. Am Kolben 14 ist der bewegliche Bremsbelag 5 angeordnet. Wird nun durch Betätigen eines geeigneten fahrzeugseitigen Betätigungselements der nicht näher gezeigte Antriebsmotor angesteuert, um die Bremseinrichtung zu betätigen, mithin also die Bremsscheibe 2 zu fixieren, so dreht über den Antriebsmotor bewegt die Gewindespindel 8, was dazu führt, dass die Gewindemutter 10 längs der Gewindespindel 8, über die Kugeln 9 geführt, wandert, sich ausgehend von Fig. 1 also nach links bewegt. Hierbei wird der auf der Stirnfläche der Gewindemutter 10 aufgelagerte Kolben 14 und mit ihm der Bremsbelag 5 nach links gedrückt, so dass er in feste Anlage gegen die am anderen Bremsbelag 4 gegengelagerte Bremsscheibe gedrückt wird, worüber diese zwischen beiden Bremsbelägen 4, 5 fixiert wird.

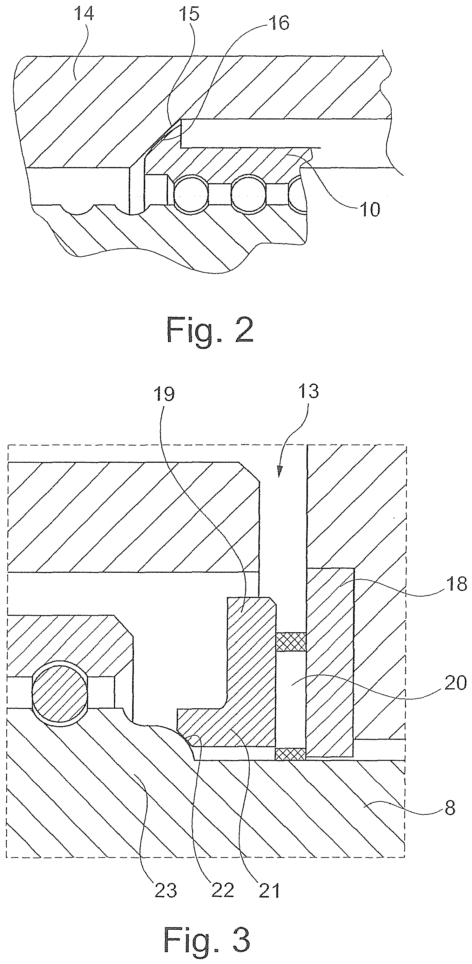

Fig. 2 zeigt in vergrößerter Darstellung eine Teilansicht aus dem Auflagerbereich des Kolbens 14 auf der Gewindemutter 10. Der Kolben 14 weist eine konische Führungsfläche 15 auf, der eine der Grundform nach ebenfalls konische zweite Führungsfläche 16 an der Stirnseite der Gewindemutter 10 gegenüberliegt, die jedoch eine ballige oder konvexe Außenform aufweist. Das heißt, dass hier keine flächige Anlage gegeben ist, sondern nur eine linienförmige Auflage der Führungsfläche 15 auf der Führungsfläche 16. Dies bewirkt, dass der Kolben 14 auf der Mutter 10 beweglich aufsitzt, das heißt, dass sich die Führungsfläche 15 auf der Führungsfläche 16 infolge der linienförmigen Lagerung bewegen kann. Der Kolben 14 kann also relativ zur Gewindemutter 10 verkippen, es ist eine über ein geeignetes Schmiermittel zur Reibungsreduzierung geschmierte bewegliche Lagerung realisiert.

Eine ebenfalls bewegliche Lagerung ist, wie Fig. 3 in einer vergrößerten Teilansicht zeigt, im Bereich der Lagerung der Gewindespindel 8 an der Bremszange 3 realisiert. Wie ausgeführt, ist die Gewindespindel 8 einerseits radial über das Radiallager 12 an der Wand 17 der Bremszange gelagert, andererseits über das Axiallager 13. Dieses umfasst eine erste Lagerscheibe 18 (Gehäusescheibe), die lagefest an der Wand 17 angeordnet ist, sowie eine zweite Lagerscheibe 19 (Wellenscheibe), die auf der ersten Lagerscheibe 18 über Nadelwälzkörper 20 läuft. Die Lagerscheibe 19 weist einen axialen Ansatz 21 auf, der eine konische zweite Lagerfläche 22 aufweist, die - ähnliche wie die Führungsfläche 16 bei der Lagerung des Kolben 14 auf der Gewindemutter 10 - eine ballige, konvexe Oberfläche bei vorzugsweise im Wesentlichen konischer Grundform aufweist.

Die Gewindespindel 8 ihrerseits weist eine erste, konvexe Lagerfläche 23 auf. Ersichtlich ist also auch hier eine bewegliche Lagerung realisiert, nachdem auch hier die erste Lagerfläche 23 nur entlang einer Linie, nicht jedoch flächig, auf der zweiten Lagerfläche 22 aufliegt. Dies führt dazu, dass die Gewindespindel 8 etwas relativ zum lagefesten Axiallager 13 bzw. zur lagefesten Lagerscheibe 19, ebenfalls geschmiert, verkippen kann. Diese Verkippung ist dadurch möglich, dass die Gewindespindel 8 im Radiallager 12 ebenfalls mit etwas Spiel aufgenommen ist respektive das Radiallager, beispielsweise ein Kunststoffgleitlager, eine gewisse Verkippung zulässt. Der Verkippungswinkel liegt im Betrieb, wenn es zu der Zangenaufweitung infolge der wirkenden Kräfte kommt, im Bereich von deutlich < 0,5° pro beweglicher Lagerstelle, so dass das Gleitlager 12 nicht nennenswert belastet wird.

Selbstverständlich ist es bei beiden Lagerstellen möglich, die Balligkeit an der jeweils anderen Führungsfläche zu realisieren, oder auch beide Führungsflächen ballig auszugestalten.

Bei der erfindungsgemäßen Bremseinrichtung 1 sind also zwei bewegliche Lagerstellen realisiert, nämlich zum einen im Bereich der Auflagerung des Kolbens 14 auf der Mutter 10, zum anderen im Bereich der Auflagerung der Gewindespindel 8 auf dem Axiallager 13. Dies führt nun dazu, dass eine bei bekannten Bremseinrichtungen gegebene Verkippung der relevanten Achsen, aus der eine hohe Lagerbelastung resultiert, die zu einem vorzeitigen Lagerausfall führen kann, weitgehend kompensiert werden kann, so dass die Lagerlasten deutlich verringert werden können.

In der in Fig. 1 gezeigten unbelasteten Stellung fallen die drei Längsachsen der Gewindespindel 8, der Bremszange 3 respektive des vorzugsweise zylindrischen gehäuseartigen Abschnitts 6 sowie des Kolbens 14 zusammen, sie sind dort mit A als gemeinsame Achse gekennzeichnet.

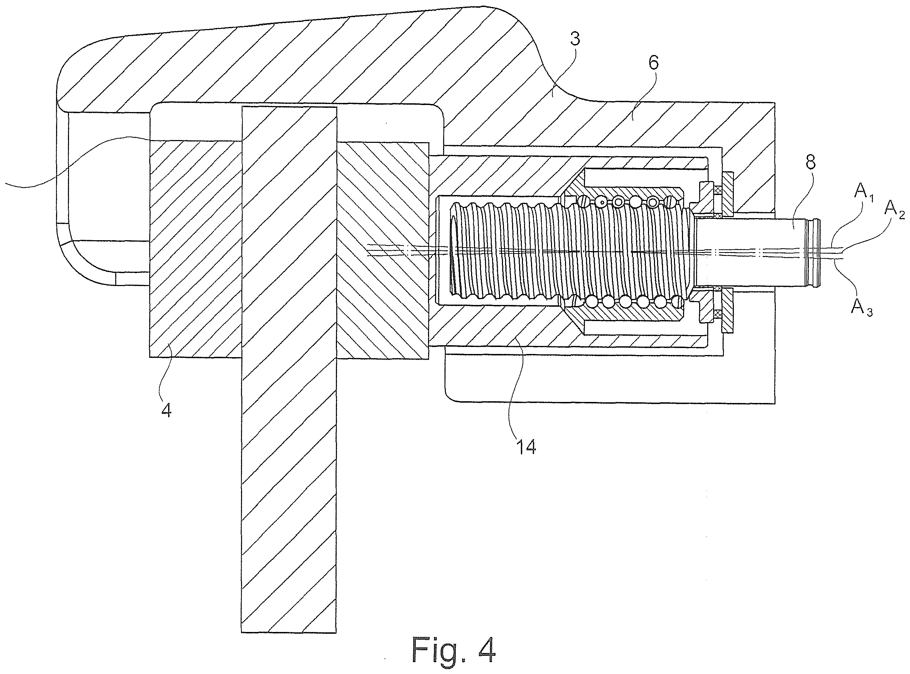

Wird nun über den nicht gezeigten Motor die Gewindespindel 8 angesteuert und über diese der Kolben 14 und mit ihm der Bremsbelag 5 gegen die Bremsscheibe 2 gedrückt, so kommt es je nach Andruckkraft zu einem mehr oder weniger starken Aufweiten oder Aufspreizen der Bremszange 3, wie dies in Fig. 4 gezeigt ist. Ersichtlich weitet sich die Bremszange 3, es bildet sich zum einen ein leichter Spalt 24 im Bereich der Bremszangenanlage am ersten Bremsbelag 4, wie sich auch deutlich eine winklige Stellung des Abschnitts 6 der Bremszange 3 relativ zum Kolben 14 einstellt. An dieser Stelle ist anzumerken, dass Fig. 4 aus Gründen der Darstellbarkeit eine deutlich überzeichnete Aufweitung und Bauteilverkippung zeigt, als real eintritt.

Dieser starke Winkelversatz kann jedoch infolge der realisierten zwei separaten Beweglichkeiten respektive beweglichen Lagerungen quasi aufgespaltet werden und die auf das Axiallager wirkende Last deutlich verringert werden. Denn zum einen führt die Verkippung der Bremszange 3, also ihre Aufspreizung dazu, dass sich der Kolben 14 relativ zur Mutter 10 leicht verkippt, was über die in Fig. 2 näher gezeigte bewegliche Auflagerung des Kolbens 14 auf der Mutter 10 über die Führungsflächen 15, 16 ergibt. In gleicher Weise kommt es zu einer leichten Verkippung der Auflagerung der Gewindespindel 8 auf dem Axiallager 13 respektive der Lagerscheibe 19 infolge der dort realisierten beweglichen Lagerung, wie in Fig. 3 gezeigt. Auch hier kommt es also zu einer wenngleich geringen Relativbewegung oder Kippbewegung. Das heißt, dass sich folglich die Elemente Kolben 14, Gewindemutter 10, Gewindespindel 8, Axiallager 13 respektive Lagerscheibe 19 lastbedingt relativ zueinander paarweise verstellen und es folglich zu einer Aufspaltung und damit gleichzeitig gegebenen lokalen Verringerung der einzelnen Verkippwinkel kommt. Mit der Relativbewegung des Axiallagers 13 zur Gewindespindel 8 kommt es auch dazu, dass sich die Gewindespindel 8 relativ zum Radiallager 12 bewegt bzw. verkippt, wie in Fig. 4 ebenfalls dargestellt ist. Während in Fig. 1 sämtliche Längsachsen wie beschrieben zusammenfallen, ergibt sich nun infolge der Bremszangenaufweitung ein Achsversatz, der jedoch deutlich geringer ist infolge der realisierten Beweglichkeiten, als er dies bei starrer Lagerung wäre. Ersichtlich fallen die einzelnen Achsen A₁ der Bremszange 3, A₂ des Kugelgewindetriebs 7 respektive der Gewindespindel 8 und A₃ des Kolbens 14 nicht mehr zusammen, gleichwohl ist der jeweilige Achsversatz relativ gering. Die im Realbetrieb auftretende maximale Schiefstellung oder Verkippung von etwa 0,5° der Bremszangenachse relativ zur Normalen auf die Bremsscheibe kann durch die erfindungsgemäß vorgesehene Entkopplung der Elemente, also ihrer relativen Beweglichkeit zueinander, gut kompensiert werden, so dass insgesamt entweder der Kugelgewindetrieb etwas kleiner dimensioniert werden kann und/oder die Lagerlebensdauer deutlich ansteigt.

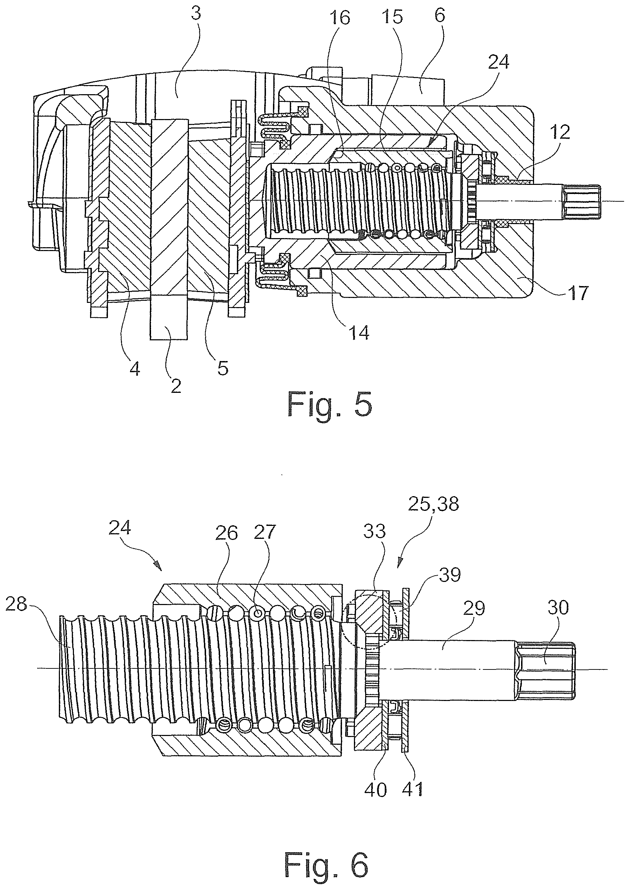

Die Figuren 5 bis 11 zeigen eine weitere Bremseinrichtung mit einem erfindungsgemäßen Kugelgewindetrieb 24. In dieser Anordnung kann die Erfindung auch als Betätigungseinrichtung für eine Feststellbremse bezeichnet werden.

Soweit die hier dargestellten Bauteile mit denen des zuvor beschriebenen Ausführungsbeispieles übereinstimmen, werden die gleichen Bezugszeichen verwendet.

Figur 5 zeigt im Schnitt eine Parkbremse oder Feststellbremse mit dem erfindungsgemäßen Kugelgewindetrieb 24. Hier ist ein gegenüber dem vorangegangenen Ausführungsbeispiel modifiziertes Axiallager 25 vorgesehen.

Der erfindungsgemäße Kugelgewindetrieb 24 mit dem Axiallager 25 ist deutlich in Figur 6 im Schnitt abgebildet. Eine Gewindemutter 26 ist über Kugeln 27 auf einer Gewindespindel 28 in bekannter Weise wälzgelagert. Die Gewindespindel 28 weist außerhalb ihres mit der Gewindemutter 26 zusammenarbeitenden Abschnitts einen radial abgestuften Spindelabschnitt 29 auf, der an seinem axialen Ende mit einem Mehrkant 30 versehen ist. Ein hier nicht abgebildetes Getriebe kann an diesen Mehrkant 30 abtriebsseitig angeschlossen werden.

Der Figur 6 ist ferner zu entnehmen, dass die Gewindespindel 28 mit ihrem Spindelabschnitt 29 durch das Axiallager 25 hindurchgeführt ist. Das Axiallager 25 umfasst eine Stützscheibe 33 sowie ein Axialwälzlager 38, bei dem Rollen 39 zwischen zwei Lagerscheiben 40,41 angeordnet sind. Die eine Lagerscheibe 40 liegt an der Stützscheibe 33 an, die andere Lagerscheibe 41 ist am gehäuseseitigen Abschnitt 6 abgestützt.

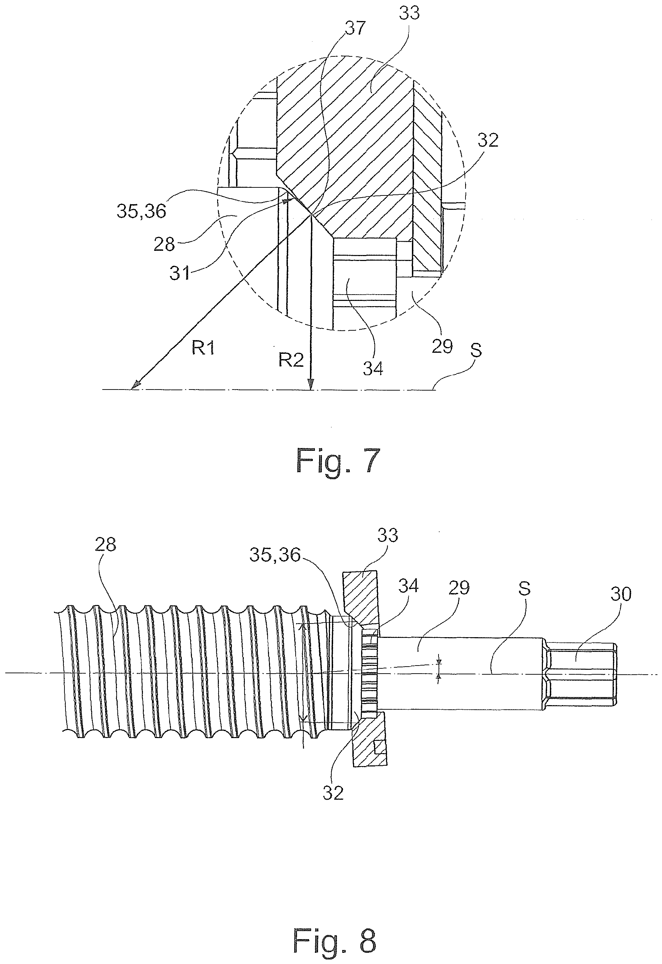

Figur 7 zeigt eine Ausschnittsvergrößerung des Kugelgewindetriebes 24 und des Axiallagers 25. Die Gewindespindel 28 ist im Übergang auf den radial abgesetzten Spindelabschnitt 29 mit einer Schulter 31 versehen. Diese Schulter 31 weist eine mit einem Krümmungsradius konvex geformte Lagerfläche 32 auf. Eine Stützscheibe 33 des Axiallagers 25 ist über eine Verzahnung 34 drehfest, aber taumelfähig auf der Gewindespindel 28 angeordnet. Die Stützscheibe 33 ist ein ihrer der ersten Lagerfläche 32 zugewandten Stirnseite mit einer konischen Öffnung 35 versehen, die eine zweite Lagerfläche 36 bildet.

In Figur 7 ist die Spindelachse S angedeutet. Der Krümmungsradius R1 der ersten Lagerfläche 32 fällt auf die Spindelachse S. Die beiden Lagerflächen 32,36 berühren einander entlang einer ringförmigen Kontaktbahn 37, deren Mittelpunkt ebenfalls auf der Spindelachse S liegt. Diese ringförmige Kontaktbahn 37 hat einen Radius R2. Der Figur 7 ist zu entnehmen, dass die beiden Radien R1 und R2 auf der Spindelachse S beabstandet zueinander angeordnet sind. Der Radius R1 ist größer als der Radius R2, wobei ein aus dem Verhältnis des Radius R1 zu dem Radius R2 gebildete Quotient erfindungsgemäß Werte zwischen 1,4 und 1,6 einschließlich dieser Werte annimmt. Ein mit dem Krümmungsradius R1 gezogener Kreis liegt in der Blattebene. Ein mit dem Krümmungsradius R2 gezogener Kreis liegt in einer quer zur Blattebene angeordneten Ebene.

Figur 8 zeigt die Situation, in der aufgrund einer elastischen Verformung der Bremszange 3 oder des gehäuseartigen Abschnitts 6 die Stützscheibe 33 gegenüber der Gewindespindel in 28 um etwa 0,5° gekippt ist, wobei in der Darstellung diese Verkippung überhöht dargestellt ist. Eine unerwünschte Belastung des Axiallagers 25 mit einem Biegemoment ist demzufolge vermieden. Die Stützscheibe 33 ist demzufolge taumelfähig auf der Gewindespindel 28 angeordnet; sie kann um quer zur Spindelachse gelegene Achsen kippen, und Drehmomente zur Übertragung von Drehmomenten zwischen Stützscheibe 33 und Gewindespindel 28 übernehmen.

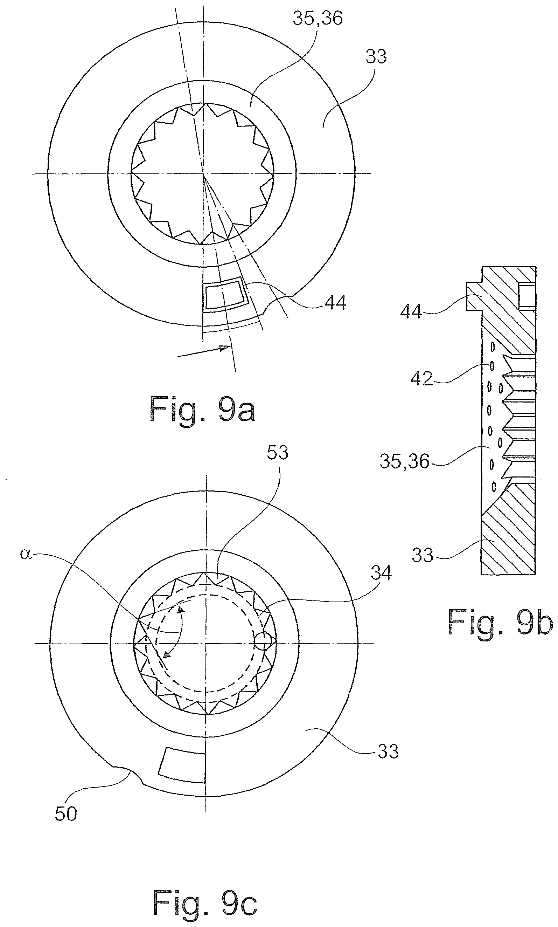

Die Figuren 9a, 9b, 9c zeigen die Stützscheibe 33 in zwei Ansichten und im Längsschnitt. In Figur 9b sind in der Wandung der konischen Öffnung 35 Taschen 42 zur Aufnahme von Schmierstoff vorgesehen. In der Kontaktbahn 37 ist somit ein Schmierfilm aufgebaut, der ein leichtgängiges Verkippen der beiden Lagerflächen 33, 36 unterstützt.

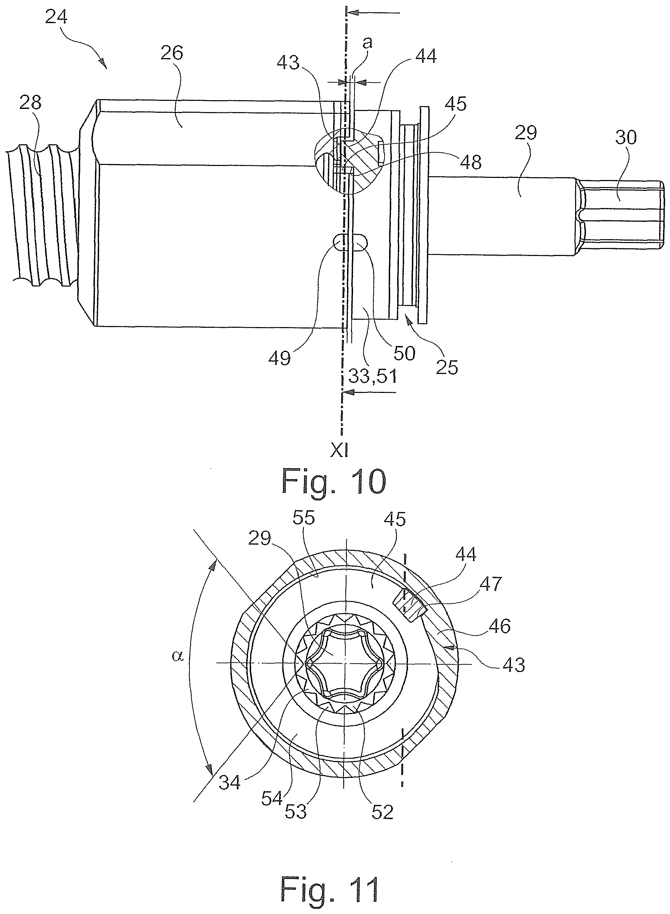

Figur 10 zeigt den erfindungsgemäßen Kugelgewindetrieb mit teilweise gebrochen dargestellter Gewindemutter 26 und Stützscheibe 33. Hier ist ein umfangsseitiger Anschlag 43 für die Gewindemutter 26 zu erkennen, der nachstehend näher beschrieben wird.

Der Figur 10 kann entnommen werden, dass die Stützscheibe 33 an ihrer der Gewindemutter 26 zugewandten Stirnseite mit einem axialen Vorsprung 44 versehen ist. Dieser axiale Vorsprung 44 greift in eine Ausnehmung 45 der Gewindemutter 26 ein.

Figur 11 zeigt deutlich die Ausnehmung 45, die sich in Umfangsrichtung über einen größeren Umfangsabschnitt erstreckt. In der einen Umfangsrichtung ist die Ausnehmung 45 begrenzt durch einen einstückig an der Gewindemutter 26 angeformten Zahn 46, der radial einwärts gerichtet ist. Der Figur 11 ist ferner zu entnehmen, dass der Vorsprung 44 in einer Anschlagposition angeordnet ist, in der er an einer ersten Anschlagfläche 47 des Zahns 46 anschlägt.

In axialer Richtung ist die Ausnehmung 45 begrenzt durch einen einstückig mit der Gewindemutter 26 ausgebildeten Boden 54. In radialer Richtung ist die Ausnehmung begrenzt durch eine einstückig mit der Gewindemutter 26 ausgebildete Umfangswandung 55.

Dieser Anschlag 43 verhindert, dass die Gewindemutter 26 axial mit der Stützscheibe 33 verspannt werden kann. Denn bevor einander zugewandte Stirnflächen der Gewindemutter 26 und der Stützscheibe 33 miteinander in Kontakt kommen, schlägt der Vorsprung 44 gegen die erste Anschlagfläche 47 des Zahns 46 an.

Die Ausnehmung 45 erstreckt sich über einen Umfangswinkel von mehr als 180°, so dass der Vorsprung 44 unter schraubender Relativdrehung zu der Gewindemutter 26 in diese Ausnehmung 45 eintaucht.

Der Umfangsanschlag 43 ist so eingestellt, dass in der Anschlagsituation zwischen der Gewindemutter 26 und der Stützscheibe 33 ein Mindestabstand a eingehalten ist, so dass jedenfalls ein axiales Verspannen zwischen Gewindemutter 26 und Gewindespindel 28 verhindert ist. In der Figur 10 ist der Mindestabstand a eingezeichnet, der zwischen den beiden einander zugewandten Stirnflächen der Gewindemutter 26 und der Spindelscheibe 33 vorgesehen ist..

Insbesondere der Figur 10 kann entnommen werden, dass der Vorsprung 44 und die erste Anschlagfläche 47 in axialer Richtung einander überdecken. Diese axiale Überdeckung ist einerseits kleiner als die gesamte axiale Erstreckung des axialen Vorsprungs 44, so dass auf jeden Fall der weiter oben erwähnte Mindestabstand a gesichert ist. Andererseits ist diese axiale Überdeckung größer als die axiale Erstreckung des Vorsprungs 44 abzüglich des axialen Mindestabstandes a zwischen dem Anschlag 43 und der Gewindemutter 26. Ferner ist die axiale Erstreckung des Vorsprungs 24 höchstens so groß wie die Steigung des Kugelgewindetriebes, um die auftretenden Biegemomente an dem Vorsprung 44 im Augenblick des Anschlagens gegen die erste Anschlagfläche 47 klein zu halten.

Um zu verhindern, dass in der Anschlagsituation radiale Kräfte aufgrund des Anschlagens erzeugt werden, sind eine an dem Vorsprung 44 gebildete zweite Anschlagfläche 48 und die zugehörige erste Anschlagfläche 47 des Zahns 46 in der Anschlagposition in einer gemeinsamen, die Spindelachse enthaltenden Ebene angeordnet.

Die im Ausführungsbeispiel an der Gewindemutter 26 stirnseitig ausgebildete Ausnehmung 45 erstreckt sich in Umfangsrichtung über einen Winkel, der gebildet ist aus einem Quotienten des Verhältnisses aus der oben erwähnten axialen Überdeckung zu der Steigung der Gewindespindel, multipliziert mit 360°, wobei zur Ermittlung des Winkels die axiale Überdeckung und die Steigung der Gewindespindel beide mit der gleichen Längeneinheit bezeichnet sind.

Der Figur 10 kann ferner entnommen werden, dass an der Gewindemutter 26 und an der Stützscheibe 33 jeweils eine optische Markierung 49,50 ausgebildet sind. Diese Markierungen 49,50 sind vorliegend kleine, am Außenumfang eingebrachte Mulden. Diese Markierungen 49 50 ermöglichen eine einfache Montage des Kugelgewindetriebes 24, was nachstehend näher erläutert wird.

Für ein einwandfreies Funktionieren des Anschlags 43 ist die Drehlagenposition der Stützscheibe 33 gegenüber der Gewindespindel 28 von Bedeutung. Wenn beispielsweise im Ausführungsbeispiel die Stützscheibe 33 entgegen dem Uhrzeigersinn um 90° um die Gewindespindel herum verdreht angeordnet wäre, könnte die Situation eintreten, dass die Gewindemutter 26 und die Stützscheibe 33 stirnseitig aneinander anschlagen, bevor der Anschlag 43 in Umfangsrichtung wirksamen ist. Demzufolge ist eine einwandfreie Drehlagenposition eines Anschlagteils 51 gegenüber der Gewindespindel 28 von Bedeutung. Im Ausführungsbeispiel ist das Anschlagteil 51 durch die Stützscheibe 33 gebildet.

Der Figur 11 kann entnommen werden, dass die weiter oben bereits erwähnte Verzahnung 34 zwischen der Stützscheibe 33 und dem Spindelabschnitt 29 der Gewindespindel 28 zur Übertragung von Drehmomenten vorgesehen ist. Diese Verzahnung 34 ermöglicht ein Aufsetzen der Stützscheibe 33 auf den Spindelabschnitt 29 in mehreren Drehlagenpositionen. Diese Verzahnung 34 ist vorliegend gebildet durch eine Außenverzahnung 52 am Außenumfang des Spindelabschnitts 29 und durch eine Innenverzahnung 53 am Innenumfang der Stützscheibe 33.

Ein Zahnflankenwinkel ader Außenverzahnung 52, beziehungsweise der Innenverzahnung 53 ist möglichst klein ausgebildet, so dass möglichst steile Zahnflanken gebildet sind. Steile Zahnflanken erleichtert die weiter oben beschriebene Kippbeweglichkeit der Stützscheibe 33 gegenüber der Gewindespindel 28. Je feiner die Verzahnung ausgebildet ist, desto mehr Drehlagenpositionen sind einstellbar.

Für eine Montage des Kugelgewindetriebes 24 kann zunächst die Gewindemutter 26 auf die Gewindespindel 28 soweit aufgeschraubt werden, bis die Gewindemutter 26 ihre vorgesehene Anschlagposition erreicht hat. Nun kann die Stützscheibe 33 auf den Spindelabschnitt 29 aufgesetzt werden, und gegenüber der Gewindespindel 28 und der Gewindemutter 26 soweit verdreht werden, bis die beiden Markierungen 49,50 miteinander fluchtend angeordnet sind. Nun kann die Stützscheibe 33 axial weiter in Richtung auf die Gewindemutter 26 geschoben werden, wobei die Innenverzahnung 53 in die Außenverzahnung 52 eingreift. Es ist auch denkbar, beispielsweise an der Stützscheibe 33 zwei Markierungen vorzusehen, zwischen denen die Markierung 49 der Gewindemutter 26 anzuordnen ist. Auf diese Weise ist ein Winkel definiert, innerhalb dessen eine zulässige Drehlagenposition für die Stützscheibe 33 gegenüber der Gewindespindel 28 gegeben ist.

Die hier skizzierte Montage kann automatisiert erfolgen, wobei die Markierungen 49,50 über geeignete Messaufnehmer erkannt werden können. Sobald diese Markierungen 49,50 miteinander fluchtend angeordnet sind, kann über eine geeignete Steuerung der nächste Montageschritt ausgelöst und die Stützscheibe 33 mit ihrer Innenverzahnung 53 auf die Außenverzahnung 52 des Spindelabschnitt 29 axial aufgeschoben werden.

Der Kugelgewindetrieb kann ohne Kugelrückführung ausgebildet sein. Das bedeutet, dass die Kugeln in einem endlichen Kugelkanal angeordnet sind und lediglich zwischen dessen Enden hin und her wälzen können. Im Ausführungsbeispiel kann eine Schraubendruckfeder in den Kugelkanal eingesetzt sein, deren eines Ende an dem Zahn 46 abgestützt ist, und deren anderes Ende gegen die letzte Kugel angefedert ist. Bei lastfreiem Kugelgewindetrieb können alle Kugeln unter Einwirkung einer Federkraft der Schraubendruckfeder in Richtung auf das Ende des Kugelkanals gefedert werden. Alternativ kann auch ein Kugelgewindetrieb in bekannter Weise mit Kugelrückführung eingesetzt werden: die Kugeln wälzen in endlosen Kugelkanälen endlos um. Der Kugelkanal ist gebildet aus einem Lastabschnitt, in dem die Kugeln unter Last an Kugelrillen der Gewindemutter und der Gewindespindel anwälzen, sowie einem Rückführungsabschnitt, in dem die Kugeln von einem Ende zu einem Anfang des Lastabschnitts rückgeführt werden. Der Rückführabschnitt kann in bekannter Weise durch ein Umlenkrohr am Außenumfang der Gewindemutter gebildet sein, aber auch durch Umlenkstücke, die in der Wandung der Gewindemutter eingesetzt sind. Diese Umlenkstücke verbinden ein Ende einer gemeinsamen Windung des Lastabschnitts mit dessen Anfang.

Im Ausführungsbeispiel ist die Gewindemutter 26 mit der Ausnehmung 45 und dem Zahn 46 aus einem Einsatzstahl halbwarm geformt. Die Halbwarmumformung wird in einem Temperaturbereich von 750 °C bis 950 °C durchgeführt. Für die Halbwarmumformung können vorgefertigte Rohteile induktiv erwärmt und auf zum Teil mehrstufigen Pressen umgeformt werden.

Die Kugelrille ist vorliegend spangebend durch Drehen hergestellt. Alternativ oder auch zusätzlich kann die Kugelrille mittels Gewindefurchen hergestellt sein. Die fertig geformte Gewindemutter wird anschließend einsatzgehärtet.

Die Stützscheibe 33 ist ebenfalls spanlos, insbesondere im halbwarmen Umformverfahren hergestellt. Insbesondere der Figur 9 kann entnommen werden, dass der axiale Vorsprung etwa halb durchgestellt ist. Das bedeutet, Material der Stützscheibe 33 ist aus dem scheibenförmigen Teil herausgeformt, wobei an der Stützscheibe 33 an ihrer von dem Vorsprung abgewandten Stirnseite mit einer Aussparung versehen ist.

### Bezugszahlenliste

- 1: Bremseinrichtung
- 2: Bremsscheibe
- 3: Bremszange
- 4: Bremsbelag
- 5: Bremsbelag
- 6: Gehäuseartiger Abschnitt
- 7: Kugelgewindetrieb
- 8: Gewindespindel
- 9: Kugeln
- 10: Gewindemutter
- 11: Kugelrückführelement
- 12: Radiallager
- 13: Axiallager
- 14: Kolben
- 15: Konische Führungsfläche
- 16: Führungsfläche
- 17: Wand
- 18: Erste Lagerscheibe
- 19: Zweite Lagerscheibe
- 20: Nadelwälzkörper
- 21: Axialer Ansatz
- 22: zweite Lagerfläche
- 23: erste Lagerfläche
- 24: Kugelgewindetrieb
- 25: Axiallager
- 26: Gewindemutter
- 27: Kugel
- 28: Gewindespindel
- 29: Spindelabschnitt
- 30: Mehrkant
- 31: Schulter
- 32: erste Lagerfläche
- 33: Stützscheibe
- 34: Verzahnung
- 35: konische Öffnung
- 36: zweite Lagerfläche
- 37: Kontaktbahn
- 38: Axialwälzlager
- 39: Rolle
- 40: Lagerscheibe
- 41: Lagerscheibe
- 42: Tasche
- 43: Anschlag
- 44: Vorsprung
- 45: Ausnehmung
- 46: Zahn
- 47: erste Anschlagfläche
- 48: zweite Anschlagfläche
- 49: Markierung
- 50: Markierung
- 51: Anschlagteil
- 52: Außenverzahnung
- 53: Innenverzahnung
- 54: Boden
- 55: Umfangswandung
- A: gemeinsame Achse
- A₁: Achse der Bremszange
- A₂: Achse des Kugelgewindetriebs
- A₃: Achse des Kolbens
- R1: Krümmungsradius der ersten Lagerfläche
- R2: Radius der Kontaktbahn
- S: Spindelachse

## Patentansprüche

1. Verfahren zum Herstellen einer Gewindemutter (10, 26) eines Kugelgewindetriebes (7, 24), welche Gewindemutter (10, 26) an einem axialen Ende eine sich über einen Umfangsabschnitt erstreckende, stirnseitig geöffnete Ausnehmung (45) aufweist, wobei diese Ausnehmung (45) radial begrenzt ist durch eine Umfangswandung der Gewindemutter (10, 26), und wobei diese Ausnehmung (45) axial begrenzt ist durch einen an der Gewindemutter (10, 26) ausgebildeten Boden (54), und wobei diese Ausnehmung (45) in Umfangsrichtung begrenzt ist durch eine an der Gewindemutter (10, 26) ausgebildete Anschlagfläche (47) für einen Vorsprung (44), und wobei am Innenumfang der Gewindemutter eine schraubenförmig um eine Achse gewundene Kugelrille vorgesehen ist, hergestellt nach den folgenden Schritten: ein Rohling wird in einem Umformprozess durch Umformung von Werkstoff unter Ausbildung der Ausnehmung (45) mittels eines Kaltfließpressverfahrens umgeformt, wobei der Boden (54) und die Anschlagfläche (47) und die Umfangswandung einstückig miteinander verbunden sind, wobei die Kugelrille spangebend durch Drehen hergestellt wird.

2. Verfahren zum Herstellen einer Gewindemutter(10, 26) eines Kugelgewindetriebes (7, 24) nach Anspruch 1 bei dem die Kugelrille im Anschluß an das Drehen durch zusätzliches Furchen bearbeitet wird.

3. Verfahren zum Herstellen einer Gewindemutter (10, 26) eines Kugelgewindetriebes (7, 24) nach einem der vorangegangenen Ansprüche, bei dem im Anschluss an den Umformprozess und die Herstellung der Kugelrille die Gewindemutter (10, 26) gehärtet, insbesondere einsatzgehärtet wird.

## Claims

1. Method for producing a threaded nut (10, 26) of a ball screw drive (7, 24), which threaded nut (10, 26) has, at an axial end, a recess (45) that extends around a circumferential portion and is open on the end side, wherein this recess (45) is radially delimited by a circumferential wall of the threaded nut (10, 26), and wherein this recess (45) is axially delimited by a base (54) formed on the threaded nut (10, 26), and wherein this recess (45) is delimited in the circumferential direction by a stop surface (47), formed on the threaded nut (10, 26), for a protrusion (44), and wherein a ball groove wound helically around an axis is provided on the inner circumference of the threaded nut, produced by the following steps: a blank is formed in a forming process by forming material, producing the recess (45) by means of a cold extrusion method, wherein the base (54) and the stop surface (47) and the circumferential wall are joined together integrally, wherein the ball groove is produced by cutting by turning.

2. Method for producing a threaded nut (10, 26) of a ball screw drive (7, 24) according to Claim 1, in which, following turning, the ball groove is machined by additional grooving.

3. Method for producing a threaded nut (10, 26) of a ball screw drive (7, 24) according to either of the preceding claims, in which, following the forming process and the production of the ball groove, the threaded nut (10, 26) is hardened, in particular case-hardened.

## Revendications

1. Procédé de fabrication d'un écrou fileté (10, 26) d'un entraînement à vis à billes (7, 24), lequel écrou fileté (10, 26) présente, au niveau d'une extrémité axiale, un évidement (45) ouvert du côté frontal, s'étendant sur une portion périphérique, cet évidement (45) étant limité radialement par une paroi périphérique de l'écrou fileté (10, 26), et cet évidement (45) étant limité axialement par un fond (54) réalisé au niveau de l'écrou fileté (10, 26), et cet évidement (45) étant limité dans la direction périphérique par une surface de butée (47) réalisée au niveau de l'écrou fileté (10, 26) pour une saillie (44), et une gorge de bille s'enroulant sous forme hélicoïdale autour d'un axe étant prévue au niveau de la périphérie intérieure de l'écrou fileté, fabriquée selon les étapes suivantes : une ébauche est façonnée par un processus de façonnage par façonnage du matériau en réalisant l'évidement (45) au moyen d'un procédé d'extrusion à froid, le fond (54) et la surface de butée (47) ainsi que la paroi périphérique étant assemblés les uns aux autres d'une seule pièce, la gorge de bille étant fabriquée par enlèvement de copeaux par tournage.

2. Procédé de fabrication d'un écrou fileté (10, 26) d'un entraînement à vis à billes (7, 24) selon la revendication 1, dans lequel la gorge de bille est usinée après le tournage par rainurage supplémentaire.

3. Procédé de fabrication d'un écrou fileté (10, 26) d'un entraînement à vis à billes (7, 24) selon l'une quelconque des revendications précédentes, dans lequel, après le processus de façonnage et la fabrication de la gorge de bille, l'écrou fileté (10, 26) est durci, en particulier cémenté.
